# EUROPEAN PATENT SPECIFICATION

(11) **EP 0 382 565 B1**
(45) Date of publication and mention of the grant of the patent: **18.10.1995**
(21) Application number: 90301412.4
(22) Date of filing: 09.02.1990
(51) Int. Cl.: H04N 9/64

(54) **Color picture image processing system**
Farbbildverarbeitungssystem
Système de traitement d'images couleurs

(30) Priority: 09.02.1989 JP 30859/89
(43) Date of publication of application: 16.08.1990
(73) Proprietor: FUJITSU LIMITED, Kawasaki-shi, Kanagawa 211 (JP)
(72) Inventor: Enomoto, Hajime, Funabashi-shi, Chiba 273 (JP); Miyamura, Isao, Niigata-shi,Niigata 950-21 (JP)
(74) Representative: Fane, Christopher Robin King

(56) References cited:
- EP-A- 0 293 225
- RECONNAISSANCE DES FORMES ET INTELLIGENCE ARTIFICIELLE, 4EME CONGRES, Paris, 25th - 27th January 1984, vol. 1, pages 15-24; D. DARBA et al.: "Separation du signal d'image couleur en deux composantes"
- PATENT ABSTRACTS OF JAPAN, vol. 12, no. 414 (E-677)[3261], 2nd November 1988; & JP-A-63 151 268

## Description

The present invention relates to a color picture image processing system.

Such a system can perform image processing and compression by separating chrominance and luminance components of a picture, defining contour lines in the picture, and assigning chrominance values along and between contour lines.

In a color picture image processing system such as a color picture reproduction workstation, only simple processing is necessary when only a single color is applied to a contour line. However, when faithful reproduction of fine color gradations, such as in a painting, is desired, normally chrominance information has to be provided for each picture element. This leads to a tremendous amount of data.

An image processing method has been proposed in which, based on chrominance synthesis information obtained by a separation of a chrominance component of a picture image into a lamellar component and a vortex component, the chrominance value of each picture element is synthesized so as to realize a faithful color reproduction using less data.

Reference is made to Japanese Patent Application Nos. JP-A-62133690 and JP-A-6339284, filed by the present applicant. These applications are directed to a color picture synthesis technique in which, for color processing transmission, a chrominance component in a given picture is separated into a lamellar component and a vortex component for transmission, and the picture is reconstructed by synthesis of the transmitted chrominance and luminance components. This technique can also be utilized in the present invention.

The above kind of coding technique is also discussed in detail in EP-A-O 293 225 by the present applicant. This document also discloses an image processing system according to the preamble of accompanying claim 1.

According to the present invention, there is provided a color image processing system for use with a coding technique employing lamellar and vortex components of chrominance information in a color picture, the system comprising: input means including means for inputting picture information constituting a color picture; separating means for separating said picture information into chrominance and luminance information, and for further separating said chrominance information into lamellar and vortex components; contour line determination means for determining at least one contour line in the color picture by using at least said lamellar and vortex components; image processing means for performing image processing using at least the or each contour line; and
synthesizing means for reproducing the color picture using the processed results from said image processing means; characterised in that:
said input means further comprises a display device for displaying windows showing processed results from said image processing means at various stages of processing, and operator input means for allowing an operator to intervene in said image processing interactively;
and in that said image processing means comprises:
contour line chrominance providing means for allowing selection of a plurality of main points on the contour line, allowing a chrominance vector to be assigned to each of the main points, and then determining chrominance vectors all along the contour line by interpolation from the chrominance vectors at the main points;
window means for storing said windows and allowing the operator to selectively display the windows on the display device;
contour line modification means responsive to said operator input means, for modifying the contour line determined by said contour line determination means in accordance with the operator's input, thereby creating a new window for storage in said window means; and
contour line inner region chrominance means for determining chrominance values all over a region defined by the contour line, based on the output of said contour line chrominance providing means.

Reference will now be made, by way of example, to the accompanying drawings, in which:
Figure 1 is a block diagram showing a color picture image processing system embodying the present invention;
Fig. 2 illustrates the chrominance component of an original picture and its separation into lamellar and vortex components;
Fig. 3 is a diagram showing a step variation of the chrominance from a domain (picture area or region) A to a domain B;
Figs. 4A to 4E illustrate contour lines, main points, and chrominance vectors in an example picture;
Figs. 5A and 5B together form a more detailed block diagram of the system of Fig.1;
Fig.s 6A to 6C illustrate the operation of a contour line chrominance provision portion and a contour line inner range chrominance processing portion of the Fig. 1 system;
Fig. 7 is a flowchart of the function of an input portion 2 and a contour line determination portion 3 in the system of Fig. 5;
Figs 8A and 8B show a flow chart showing the function of the contour line chrominance provision portion;
Fig. 9 is a flow chart showing the function of the contour line inner range chrominance processing portion; and
Fig. 10 is a flow-chart showing the function of a window portion of the Fig. 1 system.

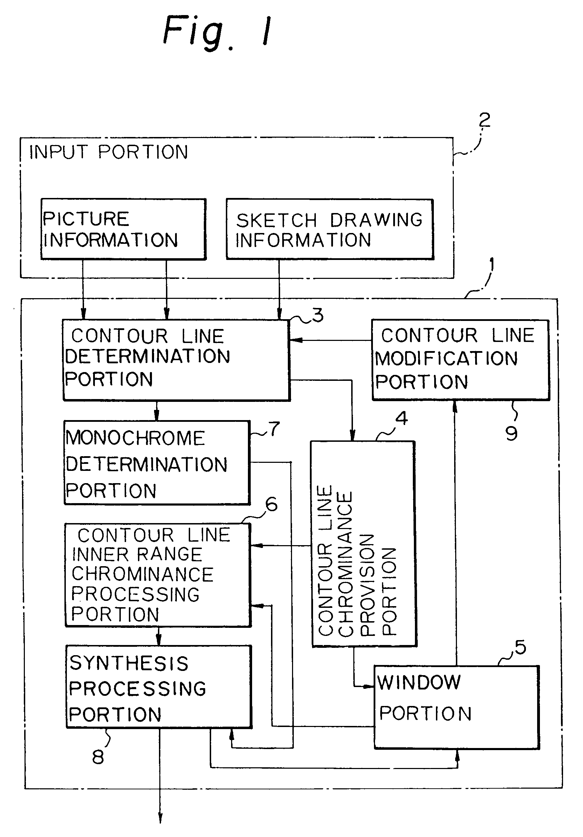

In Figure 1, reference numeral 1 denotes an information processing device, 2 is an input portion, and 3 to 9 are various processing portions within the processing device 1, as will now be explained.

Reference numeral 3 denotes a contour line determination portion in which, based on picture information corresponding to a given picture, contour lines (edges) of the picture are determined.

Determination of a contour line is based on a contour line obtained from the luminance component of the picture image, together with a contour line obtained by the use of the chrominance component separated into lamellar and vortex components. It is possible for the contour line to be modified by an operator (see later), so the above determination may be considered as provisional.

Reference numeral 4 denotes a contour line chrominance provision portion in which, firstly, a plurality of "main points" are selected on the contour line determined by the contour line determination portion 3. Next (using a hue diagram) a chrominance vector is provided for each of the main points so as to be representative of all the points on the contour line. In this processing, the above-described lamellar component and the vortex component are obtained, based on the chrominance vector provided for each main point. Then, by utilizing this chrominance synthesis information, a chrominance value is assigned to all the points on the contour line, i.e. to the points between the main points.

Reference numeral 5 denotes a window portion in which the chrominance values along the contour line obtained by the contour line chrominance provision portion are stored as a "window". Here, the term "window" has a similar meaning to a "window" shown on the display of a personal computer, for example. An operator of the system can select a window for display on a display device (not shown) provided as part of the input portion 2. Each window can hold a different stage or version of the processed information corresponding to the original picture, and can be called up by the operator for performing modification, as described later. In particular, the operator can modify the contour lines.

When the operator decides that the data displayed in a window is unsatisfactory, the window is stored as on "old" window, and the operator defines a "new" window for the modified data, possibly using the "old" window as a starting point.

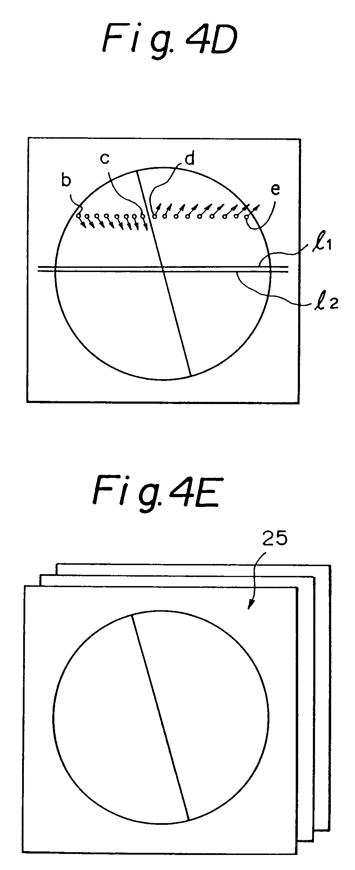

Reference numeral 6 denotes a contour line inner range chrominance processing portion which interpolates chrominance values for all points away from the contour line, i.e. within a region or domain bounded by one contour line, based on the chrominance values obtained in the contour line chrominance provision portion 4. In this processing, for example, the chrominance synthesis information is provided as stated above, with respect to both left and right points of the contour line along a horizontal scan line (see Fig. 4D), and the chrominance is synthesized for each picture element connecting between these points. Thus, chrominance is assigned all over the region bounded by the contour line.

Reference numeral 7 denotes a monochrome determination portion in which, utilizing picture image information input thereto, the luminance component is processed to form a monochrome picture.

Reference numeral 8 denotes a synthesis processing portion in which the monochrome picture from the monochrome determination portion 7 and a color (chrominance) picture from the contour line inner range chrominance processing portion 6 are combined to reconstruct a complete picture on the display device.

Reference numeral 9 denotes a contour line modification portion. The chrominance along the contour line, provided by contour line chrominance provision portion 4, and a color picture from the synthesis processing portion 8, are observed on the above display device. If necessary, the contour line determined in the above contour line determination portion 3 can be modified by means of modification portion 9, and the selection of the main points effected in the contour line chrominance provision portion 4 and determination of the chrominance vector can also be modified.

The mode of operation of the system of Figure 1 will now be described.

Based on the input picture image information, first, the contour line is determined in the contour line determination portion 3. Second, in the contour line chrominance provision portion 4, based on the chrominance vector given to each of the main points on the contour line, the chrominance is assigned to all the other points (picture elements) along the contour line. Here, the above-described chrominance synthesis information is utilized as will be described in detail below.

The resulting contour line provided with chrominance at all points, is observed by the operator on the display device. If it is regarded as acceptable, processing in which chrominance is assigned to all the picture elements bounded by the contour line can be effected. Also in this case, the above chrominance synthesis information is utilized.

The monochrome picture (luminance information) from the monochrome determination portion 7 and a color (chrominance-only) picture provided from processing portion 6 are synthesized in the synthesis processing portion 8 and output on the display device. Further, if required, a print-out of the output picture can be made.

If the displayed contour line is not acceptable, the operator can modify it interactively, by activating the contour line modification portion 9, and using a pointing device whilst observing the display to effect the desired modification. The operator can perform modification and so on with respect to various kinds of provided picture images ("windows") in an interactive mode (see later). This "interactive" feature is an important part of the present invention. More generally, the system presents the user with the features of a "paintbox" commonly used in production of pictures for television transmission, including the ability to draw graphics and paint colors in a window shown on the display device.

Before describing an embodiment of the invention in detail, some background information will be given concerning color image coding by the so-called "potential method".

When transmitting and reproducing color pictures in a television transmission, a luminance value and a chrominance value are transmitted for each point (picture element) in the color picture.

For example, assuming that the three primary colors Red (R), Green (G), and Blue (B) are used, the following signals L, I, and Q are transmitted.

In the case of the NTSC television system, the luminance signal L is given by:$\text{L = 0.2988R + 0.5868G + 0.1144B}$

As chrominance vectors I and Q, the signals I and Q are expressed as follows, respectively;$\text{I = 0.736 (R - L) - 0.286 (B - L)}$$\text{Q = 0.478 (R - L) + 0.413 (B - L)}$

The above-noted chrominance signals (that is, each signal on a chrominance component) I and Q are used to be transmitted by bearing on a subcarrier. In this case, a chrominance component can be represented by a vector V and the chrominance component vector V is expressed as 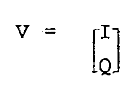
In a prior application filed by the applicant (United States Serial No. 07/199,357, filed on May 26, 1988), regarding the relevant chrominance component vector V, the expression 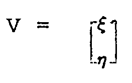
is given

If the Helmholtz's formula is applied to this vector expression, the following formula is obtained. 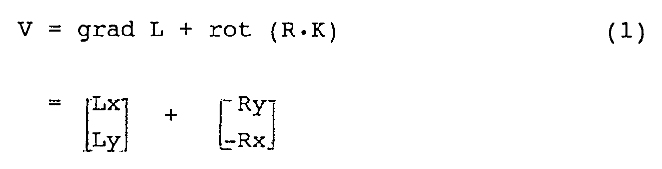
where L (x, y) denotes a scalar potential such as chrominance, R·K a vector potential for which the direction is indicated by a unit vector K in the Z-axis direction,$\text{Li =} \frac{\text{∂L}}{\text{∂i}} \text{(i = x, y) and Ri =} \frac{\text{∂R}}{\text{∂i}} \text{(i= x, y)}$

When an operation of div V is effected with the above-noted vector V in the expression (1) (hereinafter referred to as a divergence processing), the following is obtained.$\text{div V = div·grad L + div·rot (R·K)} \text{= div·grad L}$
From this relation, the expression$\text{ξx + ηy = Lxx + Lyy}$
is deduced.

When an operation of rot V is effected with the above-noted vector V in the expression (1) (hereinafter referred to as a rotation processing), the following is obtained.$\text{rot V = rot·grad L + rot·rot (R·K)} \text{= rot·rot (R.K)}$
From this relation, the expression$\text{ξy - ηx = Rxx + Ryy}$
is deduced,
where fx, fxy, and others express the partial differential operator such as$\frac{\text{∂f}}{\text{∂x}}$ ,$\frac{\text{∂²f}}{\text{∂x∂y}}$ , and others.

Each lefthand side of the above-noted equations (2) and (3) can be measured and the respective values of the lefthand sides are obtained. Thus, if the equations (2) and (3) are solved, L and R can be obtained.

When such Helmholtz's formula is applied to the chrominance component vector, the obtained grad L and rot (R.K) are referred to as a lamellar component and a vortex component, respectively.

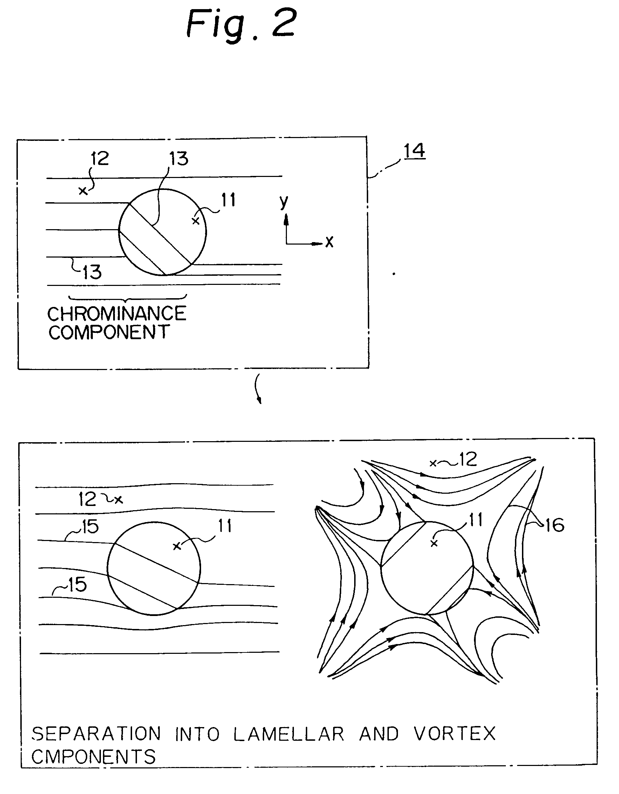

Figure 2 illustrates, as an example, the chrominance component in a color picture of a disk and its separation into lamellar and vortex components.

In Fig. 2, reference numeral 14 denotes the whole picture, in which a disk portion 11 having a certain color, is superimposed on a different-colored background portion 12. Reference numeral 13 denotes a vector line representing a chrominance component in this color pictuue. A rectilinear line 13 in a horizontal direction as shown in the figure, indicates that there is provided a certain background color in the background portion 12. A rectilinear line 13 in a slant direction indicates that a different color is present in the disk 11.

The color picture 14 can be separated into a luminance component and a chrominance component, and further, the chrominance component can be decomposed into a lamellar component and a vortex component, as shown in the lower part of Fig.2. Here, the lamellar component 15 represents a laminas (laminar or scalar) component, representing a vector signal having components I and Q.

Below, grad L and rot (R.K) denote the lamellar component and vortex component, respectively, and differentiation of grad L and rot (R.K) denotes a derivative of each component.

In order to represent the above-components as differentiated |div V|, it is necessary for the vector signals of chrominance |div V| and |rot V| to adopt the derivative representation of each lamellar component and each vortex component.

Returning to the image processing system of the present invention, in the above-described processing portions 4 and 6, the lamellar component (or its derivative) and vortex component are provided by finding the value of L and R for each respective picture element, which is done by solving the above equations (2) and (3). This produces the above-mentioned contour line having chrominance values and the chrominance-only picture image.

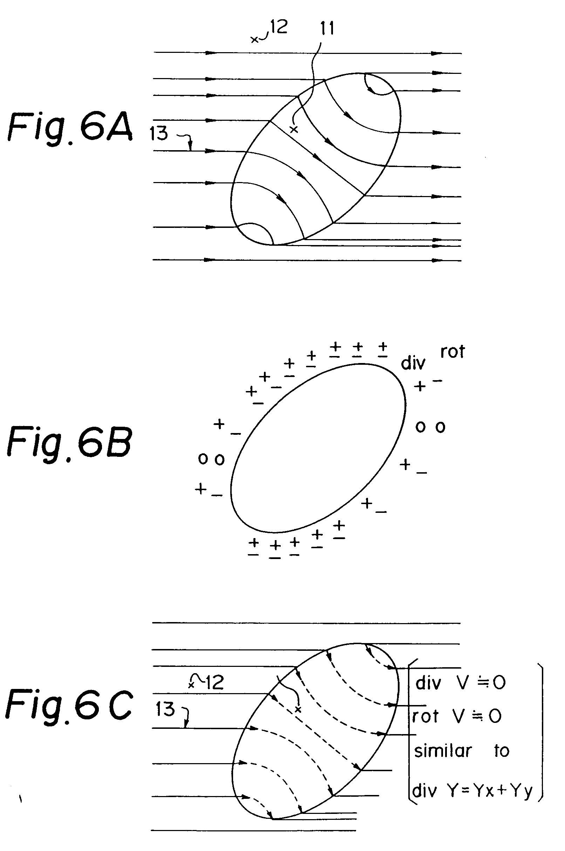

Further, in order to obtain an improved color picture image, as will be described with reference to Fig. 6, after the extraction of the contour line, attention is directed to the internal region within the contour, to avoid any discontinuity in the region of the chrominance vector leading to mutual interference shown in Fig. 2 by the lamellar component 15 and the vortex component 16.

As a result, when processing in processing portions 4 and 6 is carried out, even if only a comparatively small amount of information is processed, it is possible to synthesize fine nuances of color.

In a prior art edge detection method for color pictures, edges were searched for by solving equations of a structure line represented by the equations below. For example, from the C-line is obtained a contour line of a ridge or valley line type contour line, from the D-line, a divisional line type contour line, and from the E-line and L-line a step type contour line is obtained.

Structure lines for a scalar function φ(x, y) give primitive geometrical features satisfying a specified condition, because the structure lines are defined by the following formulae and cusp points are given by cross points of two contour lines defined by X and H. In this case, the luminance information of the color picture is used as a scalar function φ(x, y). 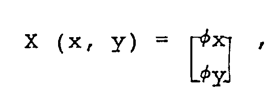 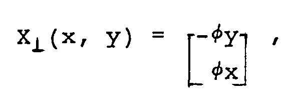 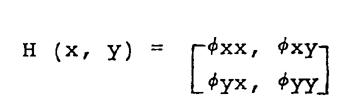 ${\text{C (x, y) = X}}^{\text{t}} {\text{HX}}_{\text{⊥}} \text{= 0 : C - line}$${\text{D (x, y) = X}}_{\text{⊥}}^{\text{t}} {\text{HX}}_{\text{⊥}} \text{= 0 : D - line}$${\text{E (x, y) = X}}^{\text{t}} \text{HX = 0 : E - line}$$\text{L (x, y) = trace H = 0 : L - line}$
where$\text{φi =} \frac{\text{∂φ}}{\text{∂i}} \text{, φij =} \frac{\text{∂²φ}}{\text{∂i∂j}}$

With respect to a vector V represented by the equation (1), divergence and rotation operations can be carried out, since a vector field 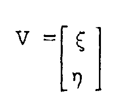
is divided into two components, which are lamellar and vortex components.

In the above-described prior art example, validly different colors occurring at a boundary are compared by observing them on a color display. However, if there is only a small difference in luminance between the colors, the boundary is not regarded as a true ridge (edge or contour line). In the present invention, to avoid this problem, in the edge determination portion 3 as shown in Fig. 1, changing points of the lamellar and vortex components are used to extract locations which exceed a predetermined threshold value, allowing contour lines to be determined using the color component, so as to supplement detection of contour lines using luminance.

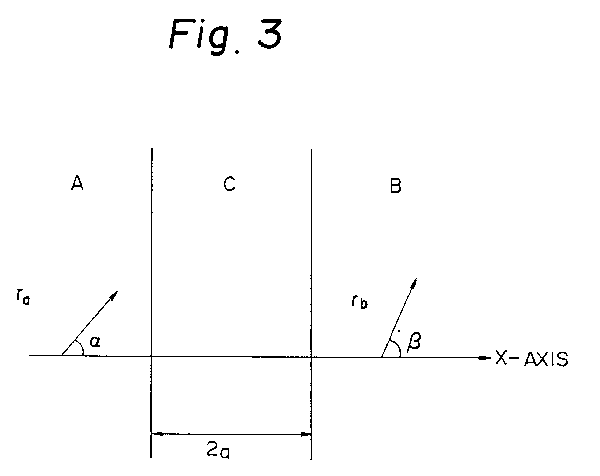

In connection with this point, the way in which contour lines are detected in a system embodying the present invention will be described with reference to Fig.3.

Suppose that a region A and a region B having different chrominance vectors are continuously (i.e smoothly) connected to each other through a region C having a width of 2a.

Now, assume that the chrominance vectors Va and V B in regions A and B are:

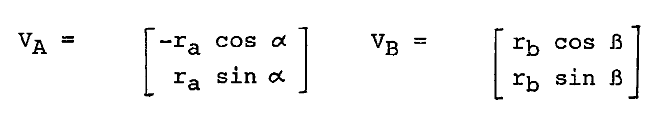

Then, if div V and rot V are found for these regions: from the definition of div V,$\text{div V =} \frac{\text{∂ξ}}{\text{∂x}} \text{+} \frac{\text{∂η}}{\text{∂y}} \text{=} \frac{\text{1}}{\text{2a}} \text{· Δξ} \text{=} \frac{\text{1}}{\text{2a}} {\text{(r}}_{\text{b}} {\text{cos β - r}}_{\text{a}} \text{cos α).}$
and from a definition of rot V,$\text{rot V =} \frac{\text{∂ξ}}{\text{∂y}} \text{+} \frac{\text{∂η}}{\text{∂x}} \text{=} \frac{\text{-1}}{\text{2a}} \text{Δ η} \text{=} \frac{\text{1}}{\text{2a}} {\text{(r}}_{\text{b}} {\text{sin β - r}}_{\text{a}} \text{sin α).}$

Here, it is significant that points on the contour line and points away from it can be distinguished as follows: as is apparent from the above formulae, div V and rot V have a value greater than zero in the vicinity of a contour line, and a zero value away from the contour line.

Therefore, if points are found where either or both of div V and rot V has a value greater than a predetermined threshold value, a contour line can be extracted. As is apparent from the above formula (2), namely:$\text{ξx + ηy = Lxx + Lyy}$
a divergence operation (DIV) can be applied to the chrominance signal V directly to find a lamellar component of |div V| as a derivative value of the lamellar component 15 in Fig. 2, whereas regarding |rot V| , as is apparent from the above formula$\text{ξy - ηx = Rxx + Ryy}$
a rotation operation (Rot) can be applied to the chrominance signal V directly to find |rot V| therefrom.

Thus, by comparing a divergence component output of a lamellar vector analysis element and a rotation component output of a vortex vector analysis element with a predetermined reference value denoting a location in the vicinity of a zero point, the contour lines can be detected.

If the above contour line detection system based on chrominance is used in combination with a contour line detection system based on luminance, a more accurate and more reliable contour line detection system for a color picture will be realized.

Such a combination can reliably detect contour lines when (i) there is no significant difference in luminance, but there is a conspicuous difference in chrominance; and (ii) when there is no significant difference in chrominance, but there is a conspicuous difference in luminance. This kind of contour line detection is known from EP-A-0 293 225 mentioned above.

The reason why the chrominance component is separated into lamellar and vortex components, as shown in Fig.2, is that, since these components are mutually orthogonal when representing valid chrominance information, the reduction of energy possessed by the chrominance signal can lead to a compression of the transmission bandwidth. Moreover, in a single-color region of the picture, |div V| and |rot V| are zero or close to zero. Therefore, the processing in the processing portions 4 and 6 can be dealt with quite simply. The mode behavior is shown in Fig.6. As shown in Fig. 6A, suppose that a picture has an ellipse of a certain color superimposed on a different-color background. By utilizing the above-mentioned means, as shown in Fig. 6B, a domain 11 and a domain 12 are separated by a contour line, thus defining regions (domains) where the value of |div V| and |rot V| assume a zero value, and enabling chrominance processing separately for each domain (see below).

Once the value of vector (ξ,η) of a chrominance component along a specified x-axis in a color picture (i.e., a lamellar component and a vortex component) is known, (ξx, ηx) can be found easily, since it is equal to the difference of (ξ,η) between adjoining picture elements. Accordingly, if each value of div V and rot V is given, (ξy, ηv) can be easily found from equations (2) and (3). From this, if a difference equation of (ξy, ηy) is solved by taking a value of (ξ,η) on a specified x-axis as an initial value, the (ξ,η), on the x-axis adjoining the specified x-axis (in other words, on an adjacent scanning line in the picture) can be reproduced. By repeating this, (ξ,η) all over the color picture can be determined.

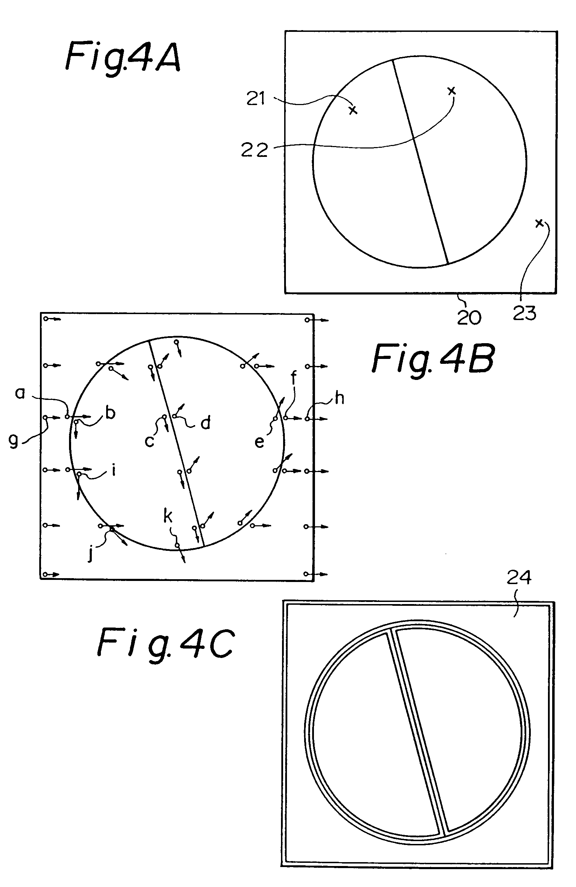

Figure 4 is constituted by Figs. 4A to E and as a whole, shows a diagram for explaining the operation of a processing method embodying the present invention. In the figure, reference numeral 20 denotes an original picture to be processed. It comprises different color semi-circular discs 21 and 22 on a background 23 of another color. The areas 21 and 22 need not be single colors, and may exhibit delicate color gradations.

In the processing method, first the contour line is determined by unit 3 shown in Fig. 1, and the picture is displayed on a display device in an input unit 2. Then, an operator refers to a known hue (chromaticity) diagram, and with regard to each of a set of main points on the contour line as shown in Fig. 4B, for example, points a, b, c, d, e, f, g, h, i, j, k, ... , he assigns a newly desired value of a chrominance vector. (Arrow lines in the figure represent a proper vector). Fig. 4B shows a state in which values of the chrominance vector are provided for all the main points.

After the chrominance vector is assigned to each main point, the contour line chrominance provision portion 4 (shown in Fig. 1) continuously determines chrominance for all the picture elements along the contour line, for example, such as between points b and i, i and j, and so on as shown in Fig. 4, thus obtaining the figure 24 shown in Fig. 4C, which is displayed to show the obtained color; that is, to show the chrominance values obtained all along the contour lines.

In this processing, based on the chrominance vector value provided to the main points a, b, c, and so on as shown in Fig. 4B, the above-noted lamellar component and vortex component are utilized.

If the operator approves the chrominance figure 24 displayed on the display device, as shown in Fig. 4C, processing is handed over to the contour line inner range chrominance processing unit 6 shown in Fig. 1. If the chrominance figure 24 is not acceptable, the window portion 5 shown in Fig.1 is used by the operator to create an alternative window figure 25 as shown in Fig. 4E. That is, modification processing is effected via the contour line modification portion 9, and the modification results are stored if need be as a new window 25.

In processing portion 6 shown in Fig. 1, again using a processing procedure in which the lamellar component and vortex component are utilized, chrominance is assigned to the other picture elements, e.g. between the points b and c as shown in Fig. 4D. For example, this is done such that the chrominance value on a scan line φ1 is expanded (increased) on the following scan line φ2.

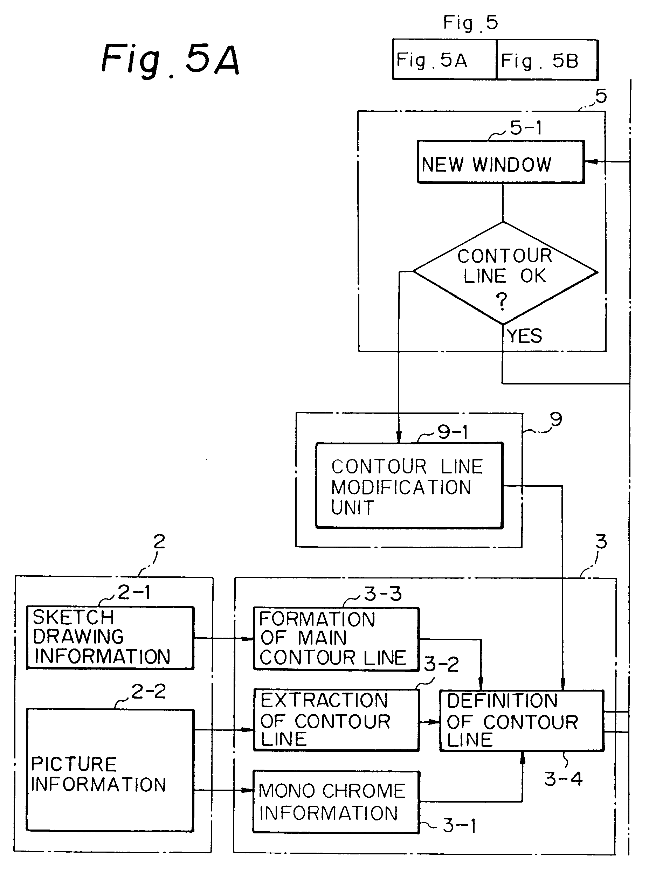

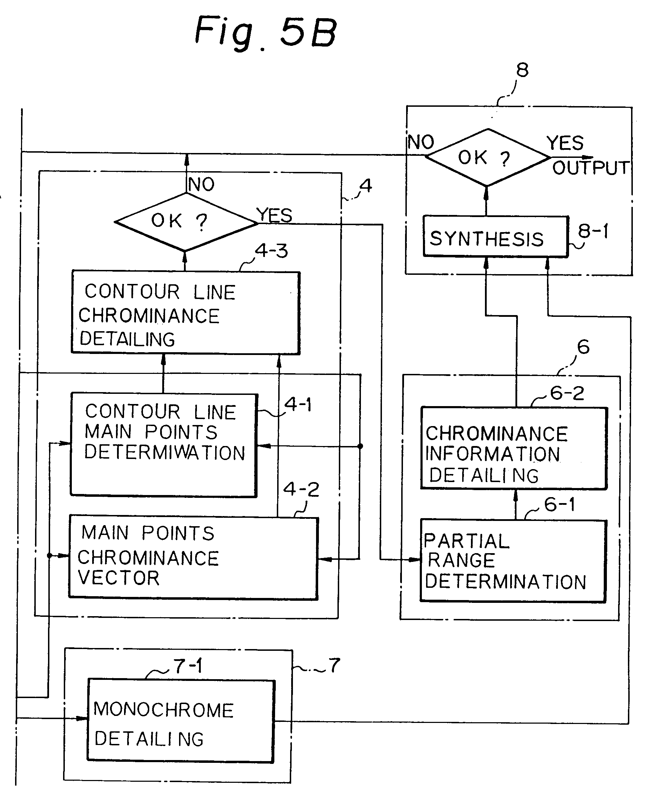

Figure 5 is a block diagram showing an embodiment in accordance with the present invention. Reference numerals 3 to 9 in Fig. 5 correspond to those in Fig.1. After explaining the parts in Fig. 5, their function will be described. The contour line determination portion 3 includes:
(i) A monochrome information extraction unit (3-1) for extracting monochrome (luminance) information from a given picture.
(ii) A contour line extraction unit (3-2) for extracting contour lines by utilizing the chrominance component of a given picture.
(iii) A main contour line formation unit (3-3) for producing a main contour line form a given dessin (sketch).
(iv) A contour line definition unit (3-4) for further defining the contour lines, e.g. by joining gaps.

Regarding the above units (i) to (iv), unit (3-1) extracts the above-noted C-line, D-line, E-line and L-line. Unit (3-2) extracts contour lines by finding points where |div V| or |rot V| exceed a threshold value, as explained above (Fig.3). Unit (3-3) produces a main contour line, by, for example, a raster scan, based on a given sketch drawing. Unit (3-4) further defines the contour lines by making up for breaks and the like in the contour lines determined so far. Further, a contour line can be modified as desired in the contour line modification portion 9.

The contour line chrominance provision portion 4 includes:
a contour line main points determination unit (4-1) for providing main points on the contour line (e.g. a, b, c and so on in Fig. 4B);
a main points chrominance vector determination unit (4-2) for determining the chrominance at the main points; and
a contour line chrominance detailing unit (4-3) for obtaining a chrominance figure 24 as shown in Fig. 4C (i.e. complete chrominance along the contour line).

The window portion 5 includes a new window holding unit (5-1) for storing alternative windows 25 as shown in Fig. 4E.

The contour line inner range chrominance processing portion 6 includes:
a partial range determination unit (6-1) for determining partial ranges (increments) of chrominance, used for adjoining scan lines, e.g. as shown in Fig. 4D, and
a chrominance information detailing unit (6-2) for assigning chrominance to each picture element based on the relevant partial range.

The monochrome determination portion 7 includes a monochrome detailing unit (7-1) for extracting in a finely segmented way, a monochrome picture representing the luminance component, from contour lines obtained by the contour line definition unit (3-4) and monochrome information obtained by the monochrome information extraction unit (3-1).

The synthesis processing portion 8 includes a synthesizing unit for combining a picture (figure) obtained by the contour line inner range chrominance processing unit 6 and a picture obtained by the monochrome determination portion 7.

The contour line modification portion 9 includes a contour line modification unit (9-1) for inputting instructions for modifying or newly establishing or eliminating a contour line and so forth on a display device, when a whole contour line obtained so far is not satisfactory.

If a figure (displayed picture) obtained from the processing portion 4 and/or 8 does not fulfil an operator's requirements, a window is opened at the window portion 5 and for the figure in the opened window, the contour lines 5 are checked. If a contour line is not acceptable, processing is transferred to the contour line modification portion 9. If the contour line 5 itself is not at fault, another amending procedure is effected in processing portion 4, with the help of the operator who observes the appropriate window on the display device. For example, the main points are re-selected or chrominance vectors are re-assigned to the main points.

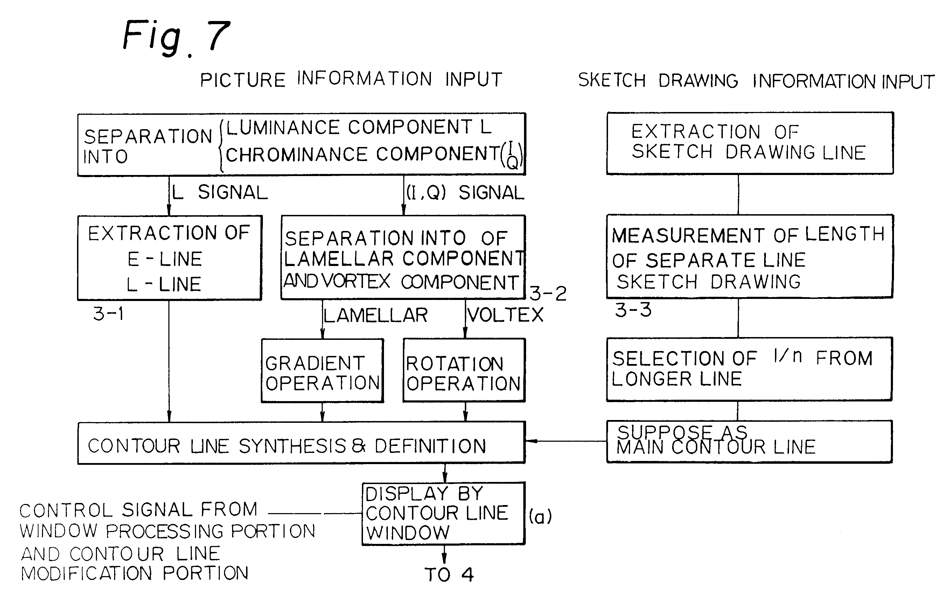

The function of the color picture image processing system of Figure 5 will be described in detail with reference to Figs. 7 to 10.

Figure 7 denotes a flow chart of the function of an input portion 2 and contour line determination portion 3.

In the input portion 2, a picture to be processed and a sketch drawing are both input to the contour line determination portion 3.

When a picture signal used in television transmission is input to the contour line determination portion 3, it is separated into a luminance component L and a chrominance component (I, Q) and from the signal, extraction of at least E-line and L-line is carried out. The monochrome extraction unit (3-1) extracts monochrome information from the given picture. The contour line extraction unit 3-2-separates each chrominance signal (I, Q) into a lamellar component and a vortex component, and then performs a grad operation on the lamellar component and a rot operation on the vortex component to extract contour lines. Then, the outputs of unit (3-1) and unit (3-2) are combined in unit (3-4) to provide a contour line definition.

When a sketch drawing (graphic) is input to the contour line determination portion 3, line figures in the sketch are extracted, and the length of each separate line figure is measured. One of the longer line figures is chosen as a main contour line, and delivered to unit (3-4).

The unit (3-4) is controlled by the window portion 5 (via contour line modification portion 9) to effect a contour line window display by delivering signals to the contour line chrominance provision portion 4. Contour line window display is regarded as one of the functions of the window portion 5, viz. 5(a) as explained below.

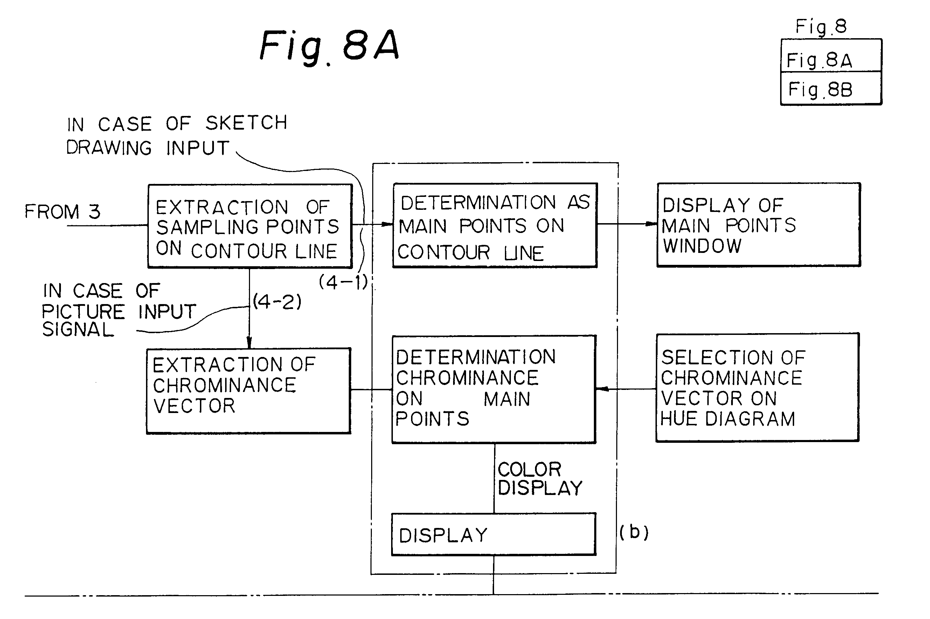

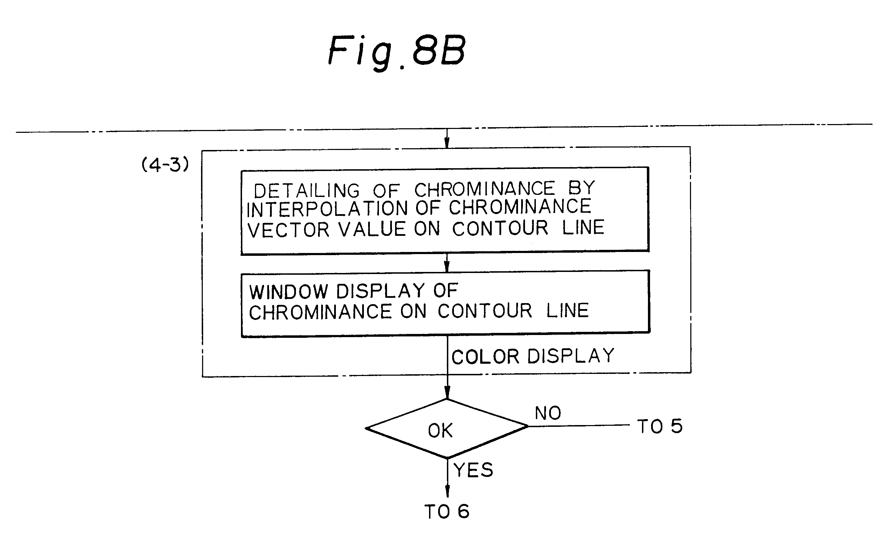

Fig. 8 denotes a flow chart of the function of the contour line chrominance provision portion 5.

The output of the contour line determination portion 3 is delivered to the contour line chrominance providing portion 4 and sampling points are extracted on the contour line. In particular the chrominance vector is extracted in unit (4-2) to determine the chrominance at the main points, the main points being found by unit (4-1) after the above procedure of sampling point extraction, to form a "main points window". Once the main points window is displayed, a procedure of "chrominance vector selection on a hue diagram" is done by the operator in order to assign chrominance vectors to the main points.

The assigned chrominance values are displayed on a color display, and then the output of unit (4-1) is delivered to unit (4-3) where a chrominance detailing is effected by interpolation so as to assign chrominance all along the contour line. Next, a resulting contour line chrominance window is displayed to the operator. If this result is OK (acceptable), an output signal is delivered to the contour line inner range chrominance processing portion 6, whereas if the result is not OK, an output signal is delivered to the window portion 5.

In the above case, the operation of the unit (4-1) corresponds to the function (5b) of the window portion 5, whereas the operation of the unit (4-3) corresponds to the function (5c) (see below).

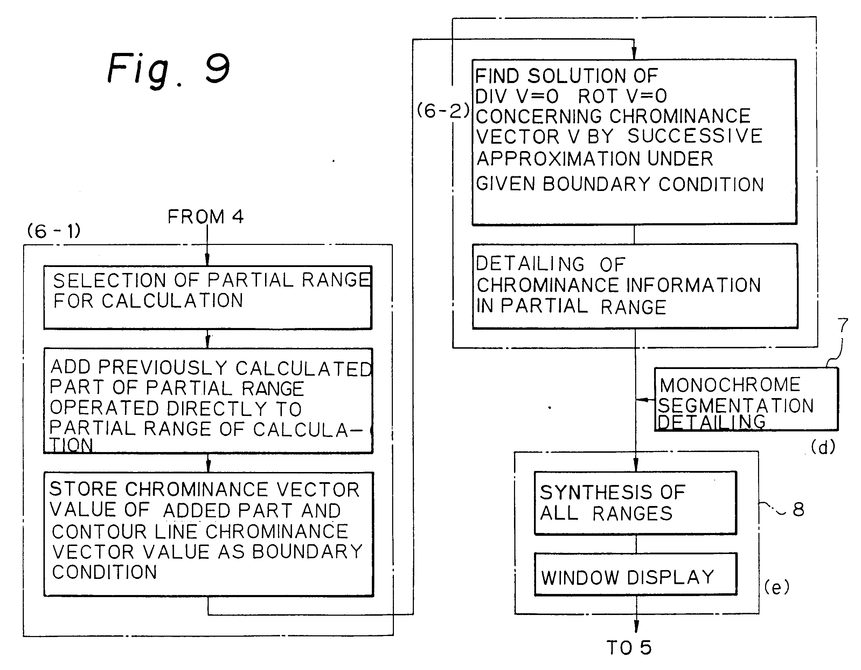

Fig. 9 denotes a flow chart of the function of the contour line inner range chrominance processing portion 6. A feature of the processing portion 6 is that chrominance can be assigned to a given picture element or domain by using the value already obtained for an adjacent element or partial domain so that the chrominance vector can maintain continuity between adjoining areas and reduce noise.

A signal from the contour line chrominance provision portion 4 is delivered to unit (6-1) (see Fig. 5b), where a domain to be processed is divided up (segmented) into partial domains (partial ranges). Then, a partial domain processed immediately before is added to a partial domain being currently processed. Values of the chrominance vector in an additional part and on a contour line are stored as a boundary condition. This stored data is delivered to unit (6-2), where firstly, solutions of div V = 0, and rot V = 0 concerning a chrominance vector are found by successive approximation under a given boundary condition, and then secondly, detailing of the chrominance information is effected in the partial domain. The output of unit (6-2) is delivered to synthesis processing portion 8 along with a signal from monochrome information detailing portion 7.

In the synthesis processing portion 8, all the domains are combined, and a resulting window is displayed. Then the output of the synthesis processing portion 8 is delivered to window portion 5.

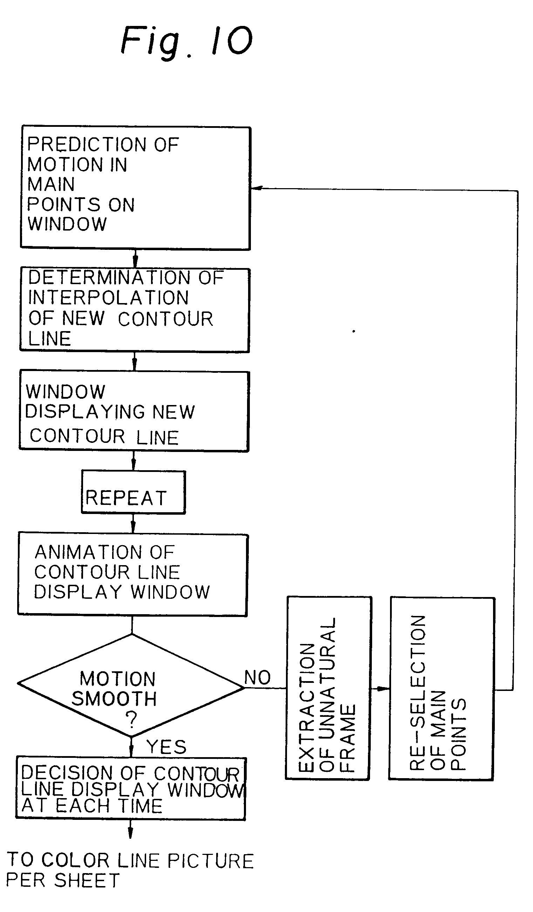

Fig. 10 denotes a flow chart of the function of the window portion 5. The window portion 5 can operate with the following types of window (functions) (a) to (e):-
(a) a contour line disply window , showing the contour line(s) and the main points thereon (see Fig.s 4A, 7 and 8A).
(b) a chrominance vector display window, showing chrominance at the main points on a contour line, as illustrated in Figure 4B. (Vectors are selected using a hue window mentioned below, by the operator).
(c) a contour line detailing hue display window, showing the chrominance all along the contour line as shown in Figure 4C. (A concrete color hue is displayed in association with a contour line portion).
(d) a monochrome screen display window showing the luminance component of the original picture. This displays the output of the monochrome detailing unit (7-1).
(e) a color picture unification display window, showing the processing result combining chrominance and luminance data. To obtain this window, the outputs of units (6-1) and (7-1) are combined.

In addition to any of the above windows (a) to (e), a hue window, filling the role of a palette, can also be displayed so that the operator can assign colors (see Fig. 8B). As is well known, a palette allows a desired color to be selected by clicking on the color using a pointing device.

The windows (a) to (e) can be displayed simultaneously in the form of a "compass", and the operator can use a pointing device and a paintbrush to input data. It is easy for an operator of the system to return to, for example, the contour line modification portion 9 or contour line chrominance provision portion 4 by selecting the appropriate window.

Moreover, the window portion 5 can be arranged to display an animation picture by interpolating between successive frames of a television picture by changing just the contour line main points, to permit a moving picture with a natural color animation.

Fig. 10 shows a flow chart of an application of a modification routine to an animation.

The motion of main points on the window by the function (5b) is predicted, a new contour line is interpolated and displayed on the window (5a), and this process is repeated for each frame. Thus, an animation of the contour line display window (5a) is obtained.

If the motion is smooth, the contour line display window (5a) at each frame is fixed and one color picture per frame (sheet) is completed. If the motion is not smooth, an unnatural frame is extracted, selection of main points is done over again, and the above procedure is repeated.

Similar to the above, the smoothness of the colors determined all along the contour line (5) can be determined by an animation display of the window (5c). Similarly using the window (5d) an animated display of a luminance component can be synthesized for successive frames and used in a color picture unification display window (5e) to check it as a complete animation. If an unnatural motion portion occurs, a modification is effected by returning to the contour line modification portion 9 or the contour line chrominance provision portion 4. In this way, a very natural color animation can be synthesized successively by the system of the present invention.

As described above, a system embodying the present invention can utilize a multi-window method and a vector characteristic effectively, making such a system widely applicable, for example to a painting box suitable for a high -definition television system (HDTV). As is well known, HDTV systems are intended to give superior reproduction of color pictures, compared with conventional transmission systems, thus requiring careful preparation and coding of pictures for transmission. The present invention can help to fulfil this requirement.

## Claims

1. A color image processing system for use with a coding technique employing lamellar and vortex components of chrominance information in a color picture, the system comprising:
input means (2) including means for inputting picture information constituting a color picture;
separating means for separating said picture information into chrominance and luminance information, and for further separating said chrominance information into lamellar and vortex components;
contour line determination means (3) for determining at least one contour line in the color picture by using at least said lamellar and vortex components;
image processing means (1) for performing image processing using at least the or each contour line; and
synthesizing means (8) for reproducing the color picture using the processed results from said image processing means (1);
characterised in that:
said input means (2) further comprises a display device for displaying windows (20, 24, 25) showing processed results from said image processing means (1) at various stages of processing, and operator input means for allowing an operator to intervene in said image processing interactively;
and in that said image processing means (1) comprises:
contour line chrominance providing means (4) for allowing selection of a plurality of main points on the contour line, allowing a chrominance vector to be assigned to each of the main points, and then determining chrominance vectors all along the contour line by interpolation from the chrominance vectors at the main points;
window means (5) for storing said windows and allowing the operator to selectively display the windows on the display device;
contour line modification means (9) responsive to said operator input means, for modifying the contour line determined by said contour line determination means (3) in accordance with the operator's input, thereby creating a new window (25) for storage in said window means; and
contour line inner region chrominance means (6) for determining chrominance values all over a region defined by the contour line, based on the output of said contour line chrominance providing means (4).

2. A system according to claim 1, wherein said input means further comprises means for inputting a sketch prepared by the operator, and wherein said contour line determination means (3) includes means (3-2) responsive to the sketch for determining contour lines.

3. A system according to claim 1 or 2, wherein said separating means supplies said luminance information to said contour line determination means (3) for use in determining contour lines.

4. A system according to claim 1, 2, or 3, wherein said contour line determination means (3) determines contour lines by performing a gradient calculation on the lamellar component and a rotation calculation on the vortex component, and finding points in the picture where the calculations give non-zero values.

5. A system according to claim 1, 2, 3, or 4, wherein said synthesizing means (8) combines the processed results from said image processing means with the luminance component in order to reproduce the color picture.

6. A system according to any preceding claim, wherein said window means (5) and said display device are operable to selectively display the following windows to the operator:
(a) a contour line display window, showing a contour line determined by said contour line determination means;
(b) a chrominance vector display window, showing the chrominance vectors assigned to main points on the contour line by the operator;
(c) a contour line detailing hue display window, showing the chrominance vectors all along the contour line as determined by interpolation by said contour line chrominance providing means;
(d) a luminance display window, showing said luminance information in the form of a monochrome image; and
(e) a color picture display window, showing the reproduced color picture obtained by said synthesizing means.

7. A system according to claim 6, wherein said display device is further operable to display a hue window (palette) for use by the operator in selecting colors as chrominance vectors at the main points of the contour line.

## Patentansprüche

1. Farbdarstellungsverarbeitungssystem zur Verwendung mit einer Codiertechnik, welche Lamellar- und Wirbelkomponenten einer Chrominanzinformation in einem Farbbild verwendet, wobei das System aufweist:
Eingabemittel (2), welche Mittel zum Eingeben von einer ein Farbbild bildenden Bildinformation umfaßt;
Trennmittel zum Trennen dieser Bildinformation in eine Chrominanz- und Luminanzinformation, und zum weiteren Trennen dieser Chrominanzinformation in Lamellar- und Wirbelkomponenten;
Konturlinienbestimmungsmittel (3) zum Bestimmen von wenigstens einer Konturlinie im Farbbild unter Verwendung zumindest dieser Lamellar- und Wirbelkomponenten;
Darstellungsverarbeitungsmittel (1) zur Durchführung einer Darstellungsverarbeitung unter Verwendung zumindest der oder jeder Konturlinie; und
Synthetisiermittel (8) zum Reproduzieren des Farbbildes unter Verwendung der Verarbeitungsergebnisse dieser Darstellungsverarbeitungsmittel (1);
dadurch **gekennzeichnet**, daß
diese Eingabemittel (2) ferner eine Anzeigeeinrichtung zum Darstellung von Fenstern (20, 24, 25) aufweist, die Verarbeitungsergebnisse dieser Darstellungsverarbeitungsmittel (1) in verschiedenen Verarbeitungsstufen anzeigen, sowie Benutzereingabemittel, die es einem Benutzer erlauben, interaktiv in die Darstellungsverarbeitung einzugreifen;
und daß die Darstellungsverarbeitungsmittel (1) umfassen:
Konturlinienchrominanz-Erstellungsmittel (4), welche die Auswahl einer Vielzahl von Hauptpunkten auf der Konturlinie ermöglichen, welche es erlauben, jedem dieser Hauptpunkte einen Chrominanzvektor zuzuordnen, und welche sodann Chrominanzvektoren entlang der gesamten Konturlinie durch Interpolation aus den Chrominanzvektoren an den Hauptpunkten bestimmen;
Fenstermittel (5) zum Speichern dieser Fenster, welche es dem Benutzer erlauben, wahlweise die Fenster auf der Anzeigeeinrichtung darzustellen;
auf die Benutzereingabemittel ansprechende Konturlinienmodifizierungsmittel (9) zum Modifizieren der durch die Konturlinienbestimmungsmittel (3) bestimmten Konturlinie entsprechend der Benutzereingabe, womit ein neues Fenster (25) zum Abspeichern in den Fenstermitteln erzeugt wird; und
Konturlinieninnenbereichschrominanz-Mittel (6) zum Bestimmen von Chrominanzwerten über einen gesamten durch die Konturlinie definierten Bereich, basierend auf der Ausgabe dieser Konturlinienchrominanz-Erstellungsmittel (4).

2. System nach Anspruch 1, bei welchem die Eingabemittel weiter Mittel zum Eingeben einer vom Benutzer vorbereiteten Skizze aufweisen und bei welchem diese Konturlinienbestimmungsmittel (3) auf die Skizze ansprechende Mittel (3-2) zum Bestimmen von Konturlinien aufweisen.

3. System nach Anspruch 1 oder 2, bei welchem die Trennmittel die Luminanzinformation den Konturlinienbestimmungsmitteln (3) zur Verwendung bei der Bestimmung von Konturlinien zuführt.

4. System nach Anspruch 1, 2 oder 3, bei welchem die Konturlinienbestimmungsmittel (3) Konturlinien bestimmen, indem sie eine Gradientenberechnung für die Lamellarkomponente und eine Rotationsberechnung für die Wirbelkomponente durchführt und in dem Bild Punkte aufsucht, wo die Berechnungen von Null abweichende Werte ergeben.

5. System nach Anspruch 1, 2, 3 oder 4, bei welchem die Synthetisiermittel (8) die Verarbeitungsergebnisse dieser Darstellungsverarbeitungsmittel mit der Luminanzkomponente kombinieren, um das Farbbild zu reproduzieren.

6. System nach einem der vorangehenden Ansprüche, bei welchem die Fenstermittel (5) und die Anzeigeeinrichtung so betrieben werden können, daß sie dem Benutzer wahlweise die folgenden Fenster anzeigen:
(a) ein Konturlinienanzeigefenster, welches eine von den Konturlinienbestimmungsmitteln bestimmte Konturlinie anzeigt;
(b) ein Chrominanzvektoranzeigefenster, welches die vom Benutzer den Hauptpunkten auf der Kontur zugeordneten Chrominanzvektoren anzeigt;
(c) ein Konturliniendetaillierungs-Farbwertanzeigefenster, welches die Chrominanzvektoren entlang der gesamten Konturlinie anzeigt, die durch Interpolation von den Konturlinienchrominanz-Erstellungsmitteln bestimmt wurden;
(d) ein Luminanzanzeigefenster, welches die Luminanzinformation in der Form einer Monochromdarstellung anzeigt; und
(e) ein Farbbildanzeigefenster, welches das reproduzierte, von den Synthetisiermitteln erhaltene Farbbild zeigt.

7. System nach Anspruch 6, bei welchem die Anzeigeeinrichtung ferner so betreibbar ist, daß sie ein Farbwertfenster (Palette) für die Verwendung durch den Benutzer beim Auswählen von Farben als Chrominanzvektoren bei den Hauptpunkten der Konturlinie anzeigt.

## Revendications

1. Système de traitement d'image en couleurs pour utilisation avec une technique de codage utilisant des composantes lamellaire et tourbillonnaire de l'information de chrominance dans une image en couleurs, le système comprenant :
un moyen d'entrée (2) incluant un moyen pour entrer de l'information d'image constituant une image en couleurs ;
un moyen de séparation pour séparer ladite information d'image en information de chrominance et de luminance, et pour séparer en outre ladite information de chrominance en composantes lamellaire et tourbillonnaire ;
un moyen de détermination de lignes de contour (3) pour déterminer au moins une ligne de contour dans l'image en couleurs en utilisant au moins lesdites composantes lamellaire et tourbillonnaire ;
un moyen de traitement d'image (1) pour effectuer le traitement d'image en utilisant au moins la, ou chaque, ligne de contour ; et un moyen de synthèse (8) pour reproduire l'image en couleurs en utilisant les résultats traités issus dudit moyen de traitement d'image (1) ;
caractérisé en ce que :
ledit moyen d'entrée (2) comprend en outre un dispositif d'affichage pour afficher des fenêtres (20, 24, 25) montrant les résultats traités issus dudit moyen de traitement d'image (1) à différents stades de traitement, et un moyen d'entrée d'opérateur pour permettre à un opérateur d'intervenir de façon interactive dans ledit traitement d'image ;
et en ce que ledit moyen de traitement d'image (1) comprend :
un moyen de délivrance de chrominance de ligne de contour (4) pour permettre la sélection de plusieurs points principaux sur la ligne de contour, en permettant qu'un vecteur chrominance soit affecté à chacun des points principaux, et pour déterminer ensuite des vecteurs chrominances tout le long de la ligne de contour par interpolation à partir des vecteurs chrominances des points principaux ;
un moyen de traitement de fenêtres (5) pour mémoriser lesdites fenêtres et pour permettre à l'opérateur d'afficher de manière sélective les fenêtres sur le dispositif d'affichage ;
un moyen de modification de ligne de contour (9), sensible audit moyen d'entrée d'opérateur, pour modifier la ligne de contour déterminée par ledit moyen de détermination de lignes de contour (3) en fonction de l'entrée d'opérateur, en créant ainsi une nouvelle fenêtre (25) pour mémorisation dans ledit moyen de traitement de fenêtres ; et
un moyen de traitement de chrominance de région intérieure de ligne de contour (6) pour déterminer des valeurs de chrominance sur toute une région définie par la ligne de contour, en se basant sur la sortie dudit moyen de délivrance de chrominance de ligne de contour (4).

2. Système selon la revendication 1 dans lequel ledit moyen d'entrée comprend en outre un moyen pour entrer une esquisse préparée par l'opérateur, et dans lequel ledit moyen de détermination de lignes de contour (3) comprend un moyen (3-2) sensible à l'esquisse pour déterminer des lignes de contour.

3. Système selon la revendication 1 ou 2, dans lequel ledit moyen de séparation délivre ladite information de délivrance audit moyen de détermination de lignes de contour (3) pour servir à déterminer des lignes de contour.

4. Système selon la revendication 1, 2 ou 3, dans lequel ledit moyen de détermination de lignes de contour (3) détermine des lignes de contour en effectuant un calcul de gradient sur la composante lamellaire et un calcul de rotation sur la composante tourbillonnaire, et en trouvant des points de l'image où les calculs donnent des valeurs non nulles.

5. Système selon la revendication 1, 2, 3 ou 4, dans lequel ledit moyen de synthèse (8) combine les résultats traités, issus dudit moyen de traitement d'image, avec la composante de luminance pour reproduire l'image en couleurs.

6. Système selon l'une quelconque des revendications précédentes, dans lequel ledit moyen de traitement de fenêtres (5) et ledit dispositif d'affichage servent à afficher de manière sélective les fenêtres suivantes, pour l'opérateur :
(a) une fenêtre d'affichage de ligne de contour, montrant une ligne de contour déterminée par ledit moyen de détermination de lignes de contour ;
(b) une fenêtre d'affichage de vecteurs chrominances, montrant les vecteurs chrominances affectés par l'opérateur aux points principaux de la ligne de contour ;
(c) une fenêtre d'affichage de teintes de détail de ligne de contour montrant les vecteurs chrominances tout le long de la ligne de contour, tels qu'ils sont déterminés par interpolation par ledit moyen de délivrance de chrominance de ligne de contour ;
(d) une fenêtre d'affichage de luminance, montrant ladite information de luminance sous la forme d'une image monochrome ; et
(e) une fenêtre d'affichage d'image en couleurs montrant l'image en couleurs reproduite obtenue par ledit moyen de synthèse.

7. Système selon la revendication 6, dans lequel ledit dispositif d'affichage sert en outre à afficher une fenêtre de teintes (une palette) pour servir à l'opérateur pour sélectionner des couleurs comme vecteurs chrominances au droit des points principaux de la ligne de contour.
